# EUROPÄISCHE PATENTSCHRIFT

(11) **EP 0 597 354 B1**
(45) Veröffentlichungstag und Bekanntmachung des Hinweises auf die Patenterteilung: **04.02.1998**
(21) Anmeldenummer: 93117724.0
(22) Anmeldetag: 02.11.1993
(51) Int. Cl.: B65G 19/26, B08B 9/42

(54) **Transportvorrichtung für Gefässe**
Transport device for containers
Dispositif de transport pour récipients

(30) Priorität: 07.11.1992 DE 9215186 U
(43) Veröffentlichungstag der Anmeldung: 18.05.1994
(73) Patentinhaber: KRONES AG HERMANN KRONSEDER MASCHINENFABRIK, D-93073 Neutraubling (DE)
(72) Erfinder: Klenk, Klaus, D-67551 Worms (DE)
(74) Vertreter: Grünecker, Kinkeldey, Stockmair & Schwanhäusser Anwaltssozietät

(56) Entgegenhaltungen:
- EP-A- 0 474 973
- DE-A- 2 913 446
- FR-A- 1 465 356
- FR-A- 2 365 504
- GB-A- 1 116 322

## Beschreibung

Die Erfindung betrifft eine Transportvorrichtung für Gefäße nach dem Oberbegriff des Anspruchs 1.

Es ist bereits eine derartige Transportvorrichtung für mehrere Gefäßreihen bekannt, bei der die Schwenkachsen der Mitnehmer in Längsrichtung des Zugmittels verlaufen und die Mitnehmer sowohl in der Ruhestellung als auch in der Arbeitsstellung rechtwinklig vom Zugmittel abstehen (DE-PS 1 183 428). Die Mitnehmer sind stangenförmig ausgebildet und erstrecken sich über die volle Breite der Bewegungsbahn aller Gefäßreihen, neben der das Zugmittel selbst in der Breite nur wenig Raum beansprucht. Das in Transportrichtung laufende Trum des Zugmittels mit den in Arbeitsstellung stehenden Mitnehmern kann auf der gewünschten Höhe der Gefäße, z.B. in Höhe des Schwerpunkts, geführt werden, so daß ein zuverlässiger Transport auch von Gefäßen mit geringer Standfestigkeit, z.B. Flaschen aus Kunststoff, möglich ist. Ungünstig ist jedoch der enorme höhenmäßige Raumbedarf für die Mitnehmer. Diese können außerdem erst hochgeklappt werden, wenn die Gefäße am Kopf von den Greifern einer Gefäßbehandlungsmaschine, z.B. einer Einpackmaschine, erfaßt und von der Transportvorrichtung weggeführt worden sind. Die Länge der Transportvorrichtung wird dadurch unnötig vergrößert. Die höhenmäßige Bewegungskomponente beim Abheben der Mitnehmer kann außerdem die Lage der Gefäße verändern und die Gefäßbewegung beunruhigen.

Auch ist schon eine Transportvorrichtung für Gefäße bekannt, bei der mehrere in parallelen senkrechten Ebenen umlaufende endlose Zugmittel vollständig unterhalb der Bewegungsbahn mehrerer Gefäßreihen angeordnet sind (DE-OS 37 02 954). An den Zugmitteln sind kurze, nockenartige Mitnehmer innerhalb der Umlaufebene und rechtwinklig zur Umlaufrichtung befestigt, die zwischen den die Gefäße führenden Förderbändern etwas nach oben ragen und im untersten Randbereich der Gefäße angreifen. Diese bekannte Transportvorrichtung ist zwar kompakt aufgebaut, jedoch nur für Gefäße mit hoher Standfestigkeit geeignet. Dies ist auch darauf zurückzuführen, daß die Förderbänder sehr schmal sein müssen, um ausreichend Eingriffsraum für die Mitnehmer zu schaffen.

Aus der britischen Patentschrift 11 16 322 ist eine Transportvorrichtung für stengeliges Gut, insbesondere im Bereich der Landwirtschaft, bekannt, bei dem an einem endlos umlaufenden Zugmittel in Form einer Gliederkette seitlich Mitnehmer angebracht sind, die um im wesentlichen vertikale Achsen schwenken können.

Aus der EP-A-0474 973 ist eine Transportvorrichtung für Faltschachteln bekannt, die als Rollengliederkette ausgebildet ist und Mitnehmer aufweist, die um Achsen schwenkbar sind, die der Knickachse der Rollengliederkette entspricht, d.h. um Achsen, die parallel zu den Achsen der Umlenkräder dieser endlos umlaufenden Rollengliederkette verlaufen.

Der Erfindung liegt die Aufgabe zugrunde, bei einer Transportvorrichtung der eingangs genannten Art unter Verbesserung des kippsicheren Transports von Gefäßen aller Art den Raumbedarf wesentlich zu senken.

Diese Aufgabe wird erfindungsgemäß durch die im Kennzeichen des Anspruchs 1 angegebenen Merkmale gelöst.

Eine erfindungsgemäße Transportvorrichtung benötigt in der Höhe kaum mehr Raum als das Zugmittel selbst, da sich die Mitnehmer in der Ruhestellung sozusagen an das Zugmittel anlegen. Die Mitnehmer können trotzdem in jeder gewünschten Höhe an den Gefäßen angreifen. Eine nachteilige Höhenbewegung der Mitnehmer beim Übergang zwischen Arbeits- und Ruhestellung ist nicht vorhanden. Die Einsatzmöglichkeiten der erfindungsgemäßen Transportvorrichtung sind daher enorm. Insbesondere bei den beengten Raumverhältnissen im Einlauf von Gefäßbehandlungsmaschinen, z.B. Einpack- oder Waschmaschinen, kann eine erfindungsgemäße Transportvorrichtung in idealer Weise zum Zuführen der Gefäße eingesetzt werden. Dabei ist es beim mehrreihigen Gefäßtransport sogar möglich, die Zugmittel mit den entsprechend kurzen Mitnehmern zwischen den Gefäßreihen anzuordnen. Entsprechende Weiterbildungen der Erfindung sind in den Unteransprüchen enthalten.

Im Nachstehenden wird ein Ausführungsbeispiel der Erfindung anhand der Zeichnungen beschrieben. Es zeigen:
- Fig. 1: die schematische Seitenansicht einer Transportvorrichtung für Gefäße im Einlaufbereich einer Flaschenwaschmaschine,
- Fig. 2: den senkrechten Schnitt A-B nach Fig. 1,
- Fig. 3: die vergrößerte Draufsicht auf den mittleren Einlaufbereich der Transportvorrichtung nach Fig. 1 und 2,
- Fig. 4: den Schnitt G-H nach Fig. 3,
- Fig. 5: den Schnitt C-D nach Fig. 3,
- Fig. 6: den Schnitt E-F nach Fig. 3,
- Fig. 7: den Schnitt J-K nach Fig. 4 in vergrößerter Darstellung.

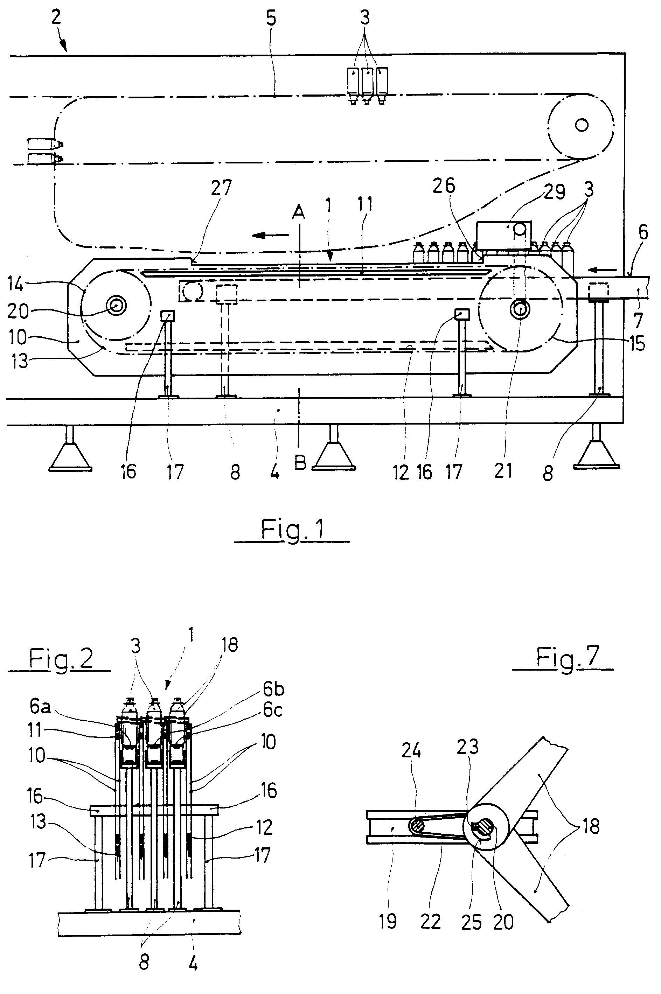

Die insgesamt mit 1 bezeichnete Transportvorrichtung nach den Fig. 1 bis 7 ist in den Einlauf einer nur teilweise dargestellten Waschmaschine 2 für Flaschen 3 aus Kunststoff integriert. Die Waschmaschine 2 weist u.a. einen Tragrahmen 4 und einen endlosen Förderer 5 auf, der die Flaschen 1 in Dreiergruppen am Kopf erfaßt und kontinuierlich durch die nicht gezeigten Behandlungsstationen transportiert. Ein derartiger Förderer ist beispielsweise im deutschen Gebrauchsmuster 91 10 492 näher beschrieben. Damit der Förderer 5 die Flaschen 3 ordnungsgemäß aufnehmen kann, müssen ihm diese in drei parallelen Reihen synchron und teilungsgerecht beabstandet zugeführt werden. Dies besorgt die Transportvorrichtung 1.

Die Transportvorrichtung 1 weist drei horizontale Förderbänder 6a, b, c mit Tragprofilen 7 auf, die sich über mehrere Ständer 8 auf dem Tragrahmen 4 abstützen. Die Förderbänder 6a, b, c werden kontinuierlich angetrieben und zwar synchron zum Förderer 5 der Waschmaschine 2 und mit der gleichen Translationsgeschwindigkeit wie dieser. Ihre Breite entspricht in etwa dem Durchmesser der Flaschen 3, für deren höhenmäßige Führung sie zuständig sind. Auf jedem Förderband 6a, b, c steht jeweils eine Flaschenreihe.

Zwischen den jeweils benachbarten Förderbändern 6a und 6b sowie 6b und 6c sind in Längsrichtung durchlaufende Lücken 9 ausgebildet. In jeder Lücke 9 sind mit geringem gegenseitigen Abstand zwei parallele Platten 10 senkrechtstehend angeordnet. Zwei weitere, gleichartige Paare von Platten 10 stehen außerdem seitlich dicht neben den äußeren Förderbändern 6a und 6c. Der Abstand zwischen den so gebildeten vier Paaren von Platten 10 ist etwas größer als der Durchmesser der Flaschen 3, deren seitliche Führung sie übernehmen. Zu diesem Zweck stehen die Platten 10 nach oben hin über die Oberfläche der Förderbänder 6 entsprechend über. Auch nach unten hin ragen die Platten 10 gegenüber den Förderbändern 6 über.

An der oberen und unteren horizontalen Längsseite ist innerhalb jedes Paares von Platten 10 jeweils eine profilierte Gleitleiste 11, 12 für ein endloses Zugmittel 13 in Form einer Rollenkette befestigt. Die in parallelen, senkrechten Ebenen umlaufenden vier Zugmittel 13 laufen außerdem über jeweils ein Antriebsrad 14 und ein Umlenkrad 15, die beide innerhalb eines Paares von Platten 10 liegen und auf gemeinsamen horizontalen Wellen 20, 21 befestigt sind. Diese sind direkt in den beiden äußeren Paaren von Platten 10 drehbar gelagert. Die vier Paare von Platten 10 sind auf mehreren horizontalen Querträgern 16 befestigt, die sich ihrerseits über Standsäulen 17 auf dem Tragrahmen 4 der Waschmaschine 2 abstützen.

Wie die Fig. 1 zeigt, liegen die oberen Gleitleisten 11 auf Höhe des Rumpfes der Flaschen 3, während die unteren Gleitleisten 12 vollständig unterhalb der Förderbänder 6 liegen. Die abgabeseitige Umlenkung der Förderbänder 6 liegt vollständig zwischen den Platten 10, während die nicht gezeigte einlaufseitige Umlenkung außerhalb der Platten 10 und auch außerhalb der Waschmaschine 2 liegt. Die drei Förderbänder 6 mit ihren Tragprofilen 7 greifen daher kammartig zwischen die durch die acht Platten 10 gebildeten vier Paare und die darin geführten vier endlosen Zugmittel 13 ein.

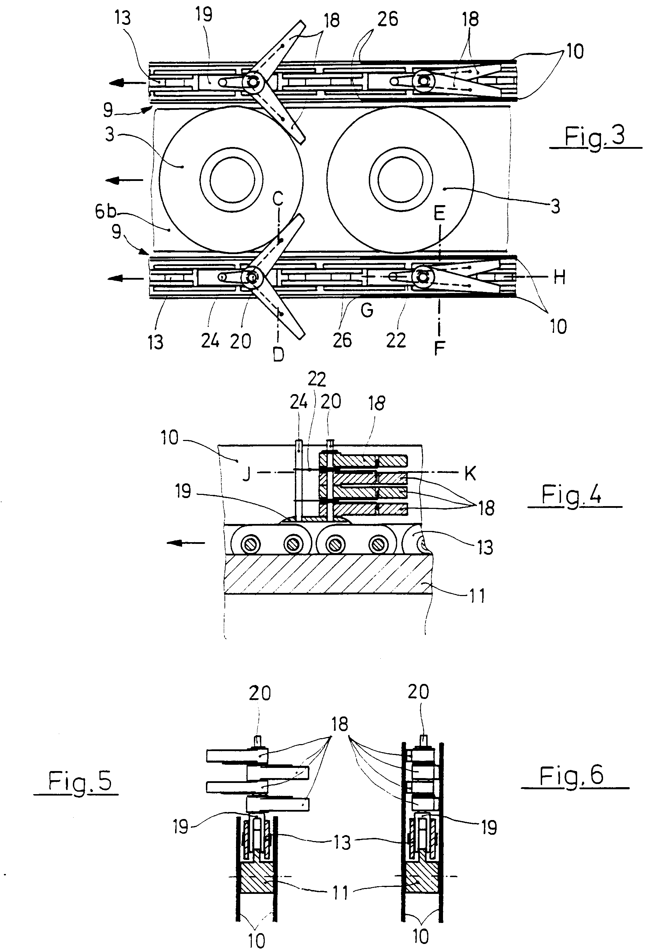

Wie die Fig. 3 bis 7 im Detail zeigen, sind die in Fig. 1 und 2 nur durch ihre Mittellinien angedeuteten, durch die Gleitleisten 11, 12 und ggf. zusätzlich durch die Platten 10 geführten Zugmittel 13 zum teilungsgerechten, exakten Transport der auf den Förderbändern 6 stehenden Flaschen 3 mit fingerförmigen Mitnehmern 18 bestückt. Hierzu sind an bestimmten vergrößerten Kettengliedern 19 Stifte 20 mit dem einen Ende befestigt, während das andere Ende innerhalb der senkrechten Umlaufebene des Zugmittels 13 rechtwinklig von diesem absteht. Auf den Stiften 20 sind die Mitnehmer 18 in ihrem einen Endbereich schwenkbar gelagert, derart, daß ihre Längsachsen senkrecht zu ihrer durch den Stift 20 definierten Schwenkachse verlaufen. Die Mitnehmer 18 sind somit im Umlaufbereich außerhalb der Umlenkräder 14, 15 in senkrecht zur Umlaufebene der Zugmittel 13 stehenden horizontalen Ebenen schwenkbar. Jeder Stift 20 trägt mehrere Mitnehmer 18. Genauer gesagt tragen die Stifte 20 der beiden außenliegenden Zugmittel 13 jeweils zwei und die Stifte 20 der beiden innenliegenden Zugmittel 13 jeweils vier Mitnehmer 18. Davon ist jeweils ein Paar von Mitnehmern 18 für die gleiche Flaschenreihe bestimmt, so daß insgesamt jede Flasche 3 von vier Mitnehmern 18 im Rumpfbereich beaufschlagt und damit exakt und kippsicher geführt wird. Hierzu trägt auch bei, daß die vier Zugmittel 13 über ihre Antriebsräder 14 synchron zum Förderer 5 mit der gleichen Translationsgeschwindigkeit wie dieser angetrieben werden, genauso wie die Förderbänder 6.

Wie die Fig. 3 zeigt, beträgt die Länge jedes Mitnehmers 18 nicht mehr als ein halber Flaschendurchmesser, so daß die von exakt gegenüberliegenden Stellen in die Bewegungsbahn der Flaschen 3 ragenden Mitnehmerpaare sich nicht gegenseitig behindern. Außerdem bilden die Mitnehmer 18 in ihrer Arbeitsposition mit dem zugehörigen Zugmittel 13 einen spitzen Winkel, indem sie von ihrer durch die Stifte 20 definierten Schwenkachse entgegen der Transportrichtung schräg abstehen. Auf diese Weise wird auf die zwischen den Mitnehmern 18 fixierten Flaschen 3 eine gewisse Zentrierwirkung ausgeübt. Es können daher auch Flaschen 3 exakt gefördert werden, deren Durchmesser wesentlich kleiner ist als die lichte Weite zwischen den Plattenpaaren.

Die Steuereinrichtung zur Bewegung der Mitnehmer 18 relativ zu den Zugmitteln 13 ist äußerst einfach aufgebaut. Sie besteht neben den bereits erwähnten Platten 10 noch aus Schenkelfedern 22 und Anschlägen 23. Die Schenkelfedern 22 stecken mit ihren Windungen zwischen den Mitnehmern 18 auf den Stiften 20 und sind auf parallel zu diesen an den speziellen Kettengliedern 19 befestigten Bolzen 24 drehfest abgestützt. Mit ihren beiden freien Enden ist jede Schenkelfeder 22 der beiden inneren Zugmittel 13 an jeweils zwei benachbarten Mitnehmern 18 eingehakt, die in ihrer Arbeitsposition flügelartig in entgegengesetzten Richtungen vom gemeinsamen Zugmittel 13 abstehen. Die Schenkelfedern auf den beiden äußeren Zugmitteln 13 benötigen nur einen freien Schenkel, der an den nach innen hin abstehenden Mitnehmern 13 angreift. Die Schenkelfedern 22 sind derart ausgebildet, daß sie die Mitnehmer in die in der linken Hälfte der Fig. 3 und in Fig. 5 gezeigte abstehende Arbeitsposition zu bewegen suchen. Diese Arbeitsposition wird durch die an der Vorderseite der Stifte 20 ausgeformten, nasenartigen Anschläge 23 festgelegt, die in entsprechende Ausnehmungen 25 der Lagerbohrungen der Mitnehmer 18 eingreifen und so deren Bewegungsraum begrenzen (siehe Fig. 7). In der Arbeitsposition liegen somit die Mitnehmer 18 unter Einwirkung der Schenkelfedern 22 an den Anschlägen 23 an. Weitere Mittel zur Fixierung der Mitnehmer 18 in ihrer Arbeitsposition sind nicht erforderlich.

In ihrer Ruheposition liegen die Mitnehmer 18 voll zwischen zwei benachbarten Platten 10, wie auf der rechten Seite der Fig. 3 und in Fig. 6 zu erkennen ist. Die Schenkelfedern 22 sind hierbei zusammengedrückt und die Mitnehmer 18 sind von den Anschlägen 23 abgehoben. In dieser Position liegen die Mitnehmer innerhalb der Umlaufebene des zugehörigen Zugmittels 13 und verlaufen mit ihrer Längsachse im wesentlichen parallel zum Zugmittel 13 bzw. zu dessen Umlaufrichtung. Der Raumbedarf außerhalb des Zugmittels 13, auch in der Höhe, ist daher äußerst gering und vollkommen unabhängig von der Anzahl der nebeneinander transportierten Flaschen 3. Die Umsteuerung der Mitnehmer 18 zwischen Arbeits- und Ruheposition und umgekehrt erfolgt durch entsprechende Gestaltung der Platten 10. In denjenigen Bereichen, in denen die Mitnehmer 18 ihre Arbeitsposition einnehmen sollen, verlaufen die Platten 10 mit einem gewissen höhenmäßigen Abstand zu den Mitnehmern, während in denjenigen Bereichen, in denen die Mitnehmer 18 ihre Ruheposition einnehmen sollen, die Platten 10 die Mitnehmer 18 höhenmäßig voll überdecken. Zwischen diesen beiden Bereichen der Platten 10 sind stufenförmige Steuerkanten 26, 27 ausgebildet (siehe Fig. 1). An der einlaufseitigen Steuerkante 26 verlassen die Mitnehmer 18 den Raum zwischen den Platten 10. Sobald die freien Enden der Mitnehmer 18 die Steuerkante 26 passiert haben, schnappen sie unter Einwirkung der Schenkelfedern 22 in ihre Arbeitsposition. Der hierbei überstrichene Bewegungsraum ist eng begrenzt, so daß die Mitnehmer sogar zwischen dicht an dicht geförderte Flaschen 3 einschwenken können. Die auslaufseitige Steuerkante 27 trifft zunächst in der Nähe der Stifte 20 direkt auf die Mitnehmer 18, gleitet dann an diesen entlang und drückt sie dabei entgegen der Kraft der Schenkelfedern 22 nach innen bzw. zusammen zwischen die Platten 10 in ihre Ruheposition, wobei sich die Mitnehmer 18, von oben gesehen, zumindest teilweise überdecken.

Die erste Steuerkante 26 liegt im Einlaufbereich der Transportvorrichtung 1 kurz nach der einlaufseitigen Umlenkung der Zugmittel 13 durch die Umlenkräder 15. In diesem Bereich werden die von den Förderbändern 6 zugeführten Flaschen 3 eingetaktet und auf den erforderlichen Teilungsabstand gebracht, entsprechend dem Teilungsabstand des Förderers 5 und dem damit übereinstimmenden Teilungsabstand der Mitnehmer 18. Dies erfolgt durch eine Einteilvorrichtung 29, die z.B. mit zwei wechselweise oszillierenden Schranken entsprechend der DE-PS 1 183 428 oder mit umlaufenden Gruppierfingern entsprechend der DE-OS 37 02 954 arbeitet.

Die zweite Steuerkante 27 liegt im Auslaufbereich der Transportvorrichtung 1 kurz vor der auslaufseitigen Umlenkung der Zugmittel 13 durch die Antriebsräder 14.

In diesem Bereich hat sich der Förderer 5 vollständig auf die Flaschenköpfe abgesenkt und diese fest ergriffen. Anschließend werden die Flaschen 3 bei eingezogenen Mitnehmern 18 durch den Förderer 5 von der Transportvorrichtung 1 abgehoben und in die Waschmaschine 2 eingeführt.

Die Platten 10, von denen in Fig. 1 nur die äußeren Umrisse gezeichnet sind, müssen nicht vollflächig ausgebildet sein, sondern können auch in denjenigen Bereichen, in denen sie keinerlei Führungs- oder Tragfunktion haben, ausgespart sein, so z.B. im mittleren Bereich zwischen den Rädern 14, 15 einerseits und den Gleitleisten 11, 12 andererseits.

## Patentansprüche

1. Transportvorrichtung für Gefäße mit deren Bewegungsbahn festlegenden Führungen, mindestens einem endlosen Zugmittel mit senkrechter Umlaufebene und mit schwenkbar am Zugmittel angelenkten Mitnehmern für die Gefäße, die mittels einer Steuereinrichtung zwischen einer im wesentlichen innerhalb der Umlaufebene und gleichzeitig außerhalb der Bewegungsbahn liegenden Ruheposition und einer seitlich aus der Umlaufebene herausragenden und gleichzeitig in die Bewegungsbahn eingreifenden Arbeitsposition bewegbar sind, wobei zumindest das in Transportrichtung laufende Trum des Zugmittels seitlich neben der Bewegungsbahn der Gefäße liegt, dadurch gekennzeichnet, daß die Schwenkachse jedes Mitnehmers (18) innerhalb der Umlaufebene im wesentlichen senkrecht zum Zugmittel (13) steht und die Mitnehmer (18) in ihrer Ruheposition im wesentlichen mit dem Zugmittel (13) fluchten, wobei die Mitnehmer (18) in einem Endbereich schwenkbar auf Stiften (20) gelagert sind, die mit einem Ende am Zugmittel (13) befestigt sind und mit dem anderen, freien Ende im wesentlichen senkrecht vom Zugmittel (13) innerhalb dessen Umlaufebene abstehen.

2. Transportvorrichtung nach Anspruch 1, dadurch gekennzeichnet, daß die Mitnehmer (18) fingerartig ausgebildet sind.

3. Transportvorrichtung nach Anspruch 1 oder 2, dadurch gekennzeichnet, daß das Zugmittel (13) als Rollenkette ausgebildet ist und die Stifte (20) an jeweils einem Kettenglied (19) senkrecht zur Rollenachse befestigt sind.

4. Transportvorrichtung nach einem der Ansprüche 1 bis 3, dadurch gekennzeichnet, daß an jedem Mitnehmer (18) ein elastisches Mittel (22) angreift, das ihn in seine durch einen Anschlag (23) festgelegte Arbeitsposition zu bewegen sucht.

5. Transportvorrichtung nach einem der Ansprüche 1 bis 4, dadurch gekennzeichnet, daß am Zugmittel (13) parallel zu den Stiften (20) Haltebolzen (24) für die als Schenkelfedern ausgebildeten elastischen Mittel (22) befestigt sind.

6. Transportvorrichtung nach Anspruch 5, dadurch gekennzeichnet, daß jeder Haltebolzen (24) am gleichen Kettenglied (19) wie der zugehörige Stift (20) befestigt ist.

7. Transportvorrichtung nach einem der Ansprüche 1 bis 6, dadurch gekennzeichnet, daß auf jedem Stift (20) mehrere Mitnehmer (18) schwenkbar gelagert sind.

8. Transportvorrichtung nach Anspruch 7, dadurch gekennzeichnet, daß die auf dem gleichen Stift (20) gelagerten Mitnehmer (18) in ihrer Arbeitsposition in entgegengesetzten Richtungen vom Zugmittel (13) abstehen.

9. Transportvorrichtung nach einem der Ansprüche 4 bis 8, dadurch gekennzeichnet, daß im Umlaufbereich der Mitnehmer (18), in dem diese die Ruheposition einnehmen sollen, entlang deren Bewegungsbahn eine die Mitnehmer (18) entgegen der Kraft der elastischen Elemente (22) in ihrer Ruhestellung haltende ortsfeste Anschlagflächen (10) vorgesehen sind.

10. Transportvorrichtung nach Anspruch 9, dadurch gekennzeichnet, daß die Anschlagflächen (10) direkt an den Mitnehmern (18) angreifen und mit ihren Anfangsbereichen die anlaufenden Mitnehmer (18) aus der Arbeitsposition in die Ruheposition verschwenken.

11. Transportvorrichtung nach Anspruch 9 oder 10, dadurch gekennzeichnet, daß die Anschlagflächen durch Streifen oder Platten (10) gebildet werden.

12. Transportvorrichtung nach Anspruch 11, dadurch gekennzeichnet, daß sich die Platten (10) oder Streifen ohne Kontakt mit den Mitnehmern (18) entlang deren Arbeitsbereich erstrecken und als seitliche Führungen für die Gefäße ausgebildet sind.

13. Transportvorrichtung nach Anspruch 11 oder 12, dadurch gekennzeichnet, daß jedes Zugmittel (13) zumindest teilweise zwischen zwei parallelen Platten (10) oder Streifen liegt, die als seitliche Abdeckung für das Zugmittel (13), als seitliche Führung für die Gefäße sowie als Steuereinrichtung für die Mitnehmer (18) ausgebildet sind.

14. Transportvorrichtung nach Anspruch 13, dadurch gekennzeichnet, daß zwischen den parallelen Platten (10) Gleitleisten (11, 12) zur Führung des Zugmittels (13) befestigt sind.

15. Transportvorrichtung nach einem der Ansprüche 1 bis 14, dadurch gekennzeichnet, daß zum mehrreihigen Transport von Gefäßen mehrere parallele Zugmittel (13) vorgesehen sind, von denen mindestens eines zwischen zwei benachbarten Gefäßreihen umläuft.

16. Transportvorrichtung nach Anspruch 15, dadurch gekennzeichnet, daß jede Gefäßreihe auf einem eigenen Förderband (6) steht und zwischen den Förderbändern (6) Lücken (9) ausgebildet sind, in denen mindestens ein endloses Zugmittel (13) umläuft.

17. Transportvorrichtung nach einem der Ansprüche 1 bis 16, dadurch gekennzeichnet, daß in ihrem Einlaufbereich eine synchron zum Zugmittel (13) angetriebene Einteilvorrichtung (29) zum teilungsgerechten Übergeben der Gefäße an die Mitnehmer (18) angeordnet ist.

18. Transportvorrichtung nach einem der Ansprüche 1 bis 17, dadurch gekennzeichnet, daß sie mit dem Einlaufbereich des die Gefäße teilungsgerecht von den Mitnehmern (18) übernehmenden Förderers (5) einer Gefäßbehandlungsmaschine (2) zusammenarbeitet.

19. Transportvorrichtung nach Anspruch 18, dadurch gekennzeichnet, daß der Förderer (5) überhalb den Mitnehmern (18) an den Gefäßen angreift.

20. Transportvorrichtung nach einem der Ansprüche 1 bis 19, dadurch gekennzeichnet, daß die Mitnehmer (18) in ihrer Ruheposition mit ihrem freien Ende entgegen der Umlaufrichtung des Zugmittels (13) weisen.

21. Transportvorrichtung nach einem der Ansprüche 1 bis 20, dadurch gekennzeichnet, daß die Mitnehmer (18) in ihrer Arbeitsposition mit dem zugehörigen Zugmittel (13) einen spitzen Winkel einschließen.

22. Transportvorrichtung nach einem der Ansprüche 1 bis 21, dadurch gekenzeichnet, daß die Mitnehmer (18) in der Arbeitsposition maximal bis zur Mitte der Bewegungsbahn der Gefäße in diese eintauchen.

23. Transportvorrichtung nach Anspruch 22, dadurch gekennzeichnet, daß zu beiden Seiten jeder Gefäßreihe jeweils ein umlaufendes Zugmittel (13) mit in die Bewegungsbahn teilweise eintauchenden Mitnehmern (18) angeordnet ist.

## Claims

1. A transport device for vessels, which comprises guide means determining the path of movement of said vessels, at least one endless traction means having a vertical plane of circulation, and carriers pivotably articulated on said traction means and used for the vessels, said carriers being adapted to be moved with the aid of a control means between an inoperative position in which they are located essentially within the plane of circulation and simultaneously outside of the path of movement and a working position in which they project laterally from the plane of circulation and extend simultaneously into the path of movement, at least the leg of the traction means which moves in the direction of transport extending at the side of and next to the path of movement of the vessels, characterized in that the pivot axis of each of the carriers (18) extends essentially at right angles to the traction means (13) within the plane of circulation and that, in their inoperative position, the carriers (18) are essentially in alignment with the traction means (13), said carriers (18) being pivotably supported on pins (20) in an end section thereof, and said pins (20) having one end thereof secured to the traction means (13), whereas the other, free end thereof projects from the traction means (13) essentially at right angles within the plane of circulation of said traction means (13).

2. A transport device according to claim 1, characterized in that the carriers (18) are finger-shaped.

3. A transport device according to claim 1 or 2, characterized in that the traction means (13) is constructed as a roller chain, and that each of the pins (20) is secured to one chain member (19) perpendicularly to the roller axis.

4. A transport device according to one of the claims 1 to 3, characterized in that each carrier (18) is acted upon by an elastic means (22) which tries to move the carrier into its working position delimited by a stop (23).

5. A transport device according to one of the claims 1 to 4, characterized in that the traction means (13) have secured thereto holding studs (24) which extend parallel to said pins (20) and which are used for the elastic means (22) constructed as leg springs.

6. A transport device according to claim 5, characterized in that each holding stud (24) is secured to the same chain member (19) as the pin (20) associated therewith.

7. A transport device according to one of the claims 1 to 6, characterized in that a plurality of carriers (18) is pivotably supported on each pin (20).

8. A transport device according to claim 7, characterized in that the carriers (18) supported on the same pin (20) project from the traction means (13) in opposite directions when they are at their working position.

9. A transport device according to one of the claims 4 to 8, characterized in that, in the area of circulation of the carriers (18) in which said carriers are intended to occupy the inoperative position, stationary stop surfaces (10) are provided along the path of movement of said carriers, said stop surfaces (10) holding said carriers (18) in their inoperative position against the force of the elastic elements (22).

10. A transport device according to claim 9, characterized in that the stop surfaces (10) act directly on the carriers (18) and pivot by means of their leading sections the moving carriers (18) from their working position to their inoperative position.

11. A transport device according to claim 9 or 10, characterized in that the stop surfaces are defined by strips or plates (10).

12. A transport device according to claim 11, characterized in that the plates (10) or strips extend along the working area of the carriers (18) without being in contact with said carriers, and that they are constructed as lateral guide means for the vessels.

13. A transport device according to claim 11 or 12, characterized in that each traction means (13) is positioned, at least partially, between two parallel plates (10) or strips, which are constructed as a lateral cover for said traction means (13), as a lateral guide means for the vessels, and as a control means for the carriers (18).

14. A transport device according to claim 13, characterized in that sliding strips (11, 12), which are used for guiding the traction means (13), are secured between the parallel plates (10).

15. A transport device according to one of the claims 1 to 14, characterized in that, for transporting several rows of vessels, a plurality of parallel traction means (13) is provided, at least one of said traction means (13) circulating between two neighbouring rows of vessels.

16. A transport device according to claim 15, characterized in that each row of vessels stands on a separate conveyor belt (6) and that gaps (9) are formed between the convevor belts (6), at least one endless traction means (13) circulating in said gaps (9).

17. A transport device according to one of the claims 1 to 16, characterized in that a separation means (29) is arranged in the inlet area of said transport device, said separation means (29) being driven in synchronism with the traction means (13) and being used for partition-adequate transfer of the vessels to the carriers (18).

18. A transport device according to one of the claims 1 to 17, characterized in that it cooperates with the inlet area of the conveyor (5) of a vessel treatment machine (2), the vessels being transferred from the carriers (18) to said conveyor (5) in a partition-adequate manner.

19. A transport device according to claim 18, characterized in that the conveyor (5) takes hold of the vessels above the carriers (18).

20. A transport device according to one of the claims 1 to 19, characterized in that, when the carriers (18) are in their inoperative position, their free ends point in a direction contrary to the direction of circulation of the traction means (13).

21. A transport device according to one of the claims 1 to 20, characterized in that, when the carriers (18) are in their working position, they define an acute angle with the associated traction means (13).

22. A transport device according to one of the claims 1 to 21, characterized in that, when the carriers (18) are in their working position, they project into the path of movement of the vessels up to the middle of said path of movement at the most.

23. A transport device according to claim 22, characterized in that, a circulating traction means (13) with carriers (18) projecting partly into the path of movement is arranged on either side of each row of vessels.

## Revendications

1. Dispositif de transport pour récipients, comprenant des guidages qui en définissent la trajectoire de mouvement, au moins un moyen de traction sans fin avec plan de circulation vertical et avec des tocs d'entraînement pour les récipients, articulés sur le moyen de traction, lesquels peuvent être déplacés au moyen d'un dispositif de commande entre une position de repos située sensiblement à l'intérieur du plan de circulation et en même temps en dehors de la trajectoire de mouvement, et une position de travail dépassant latéralement du plan de circulation et s'engageant en même temps dans la trajectoire de mouvement, au moins le brin du moyen de traction tournant dans la direction de transport se situant latéralement à côté de la trajectoire de mouvement des récipients, **caractérisé en ce** que l'axe de pivotement de chaque toc d'entraînement (18) s'étend, à l'intérieur du plan de circulation, sensiblement perpendiculairement au moyen de traction (13), et que, dans la position de repos, les tocs d'entraînement (18) sont sensiblement alignés avec le moyen de traction (13), les tocs d'entraînement (18) étant montés avec une section terminale de manière pivotante sur des tiges (20) lesquelles sont fixées avec l'une de leurs extrémités sur le moyen de traction (13) et dépassent avec l'autre extrémité libre sensiblement perpendiculairement du moyen de traction (13), à l'intérieur du plan de circulation de celui-ci.

2. Dispositif de transport selon la revendication 1, caractérisé en ce que les tocs d'entraînement (18) sont conformés en doigts.

3. Dispositif de transport selon la revendication 1 ou 2, caractérisé en ce que le moyen de traction (13) est réalisé sous la forme d'une chaîne à rouleaux, et que les tiges (20) sont respectivement fixées sur un maillon de chaîne (19), perpendiculairement à l'axe du rouleau.

4. Dispositif de transport selon l'une des revendications 1 à 3, caractérisé en ce que chaque toc d'entraînement (18) est soumis à l'action d'un organe élastique (22) qui cherche à l'amener dans sa position de travail définie par une butée (23).

5. Dispositif de transport selon l'une des revendications 1 à 4, caractérisé en ce que sur le moyen de traction (13) sont fixés, parallèlement aux tiges (20), des axes de retenue (24) pour les organes élastiques (22) conformés en ressorts à branches.

6. Dispositif de transport selon la revendication 5, caractérisé en ce que chaque axe de retenue (24) est fixé sur le même maillon de chaîne (19) que la tige (20) associée.

7. Dispositif de transport selon l'une des revendications 1 à 6, caractérisé en ce que sur chaque tige (20) plusieurs tocs d'entraînement (18) sont montés de manière pivotante.

8. Dispositif de transport selon la revendication 7, caractérisé en ce que les tocs d'entraînement (18) montés sur la même tige (20) dépassent du moyen de traction (13), dans leur position de travail, dans des directions opposées.

9. Dispositif de transport selon l'une des revendications 4 à 8, caractérisé en ce que dans la zone de circulation des tocs d'entraînement (18) dans laquelle ceux-ci doivent occuper la position de repos, sont prévues des surfaces d'arrêt (10) fixes qui maintiennent les tocs d'entraînement (18), le long de la trajectoire de mouvement de ceux-ci, contre la force des éléments élastiques (22), dans leur position de repos.

10. Dispositif de transport selon la revendication 9, caractérisé en ce que les surfaces d'arrêt (10) agissent directement sur les tocs d'entraînement (18) et font pivoter les tocs d'entraînement (18), avec leurs sections de départ, de la position de travail dans la position de repos.

11. Dispositif de transport selon la revendication 9 ou 10, caractérisé en ce que les surfaces d'arrêt sont formées par des bandes ou des plaques (10).

12. Dispositif de transport selon la revendication 11, caractérisé en ce que les plaques (10) ou bandes s'étendent, sans contact avec les tocs d'entraînement (18), le long la zone de travail de ceux-ci, et qu'elles sont conformées en guidages latéraux pour les récipients.

13. Dispositif de transport selon la revendication 11 ou 12, caractérisé en ce que chaque moyen de traction (13) se situe au moins en partie entre deux plaques (10) ou bandes parallèles qui sont conformées en recouvrement latéral pour le moyen de traction (13), en guidage latéral pour les récipients ainsi qu'en dispositif de commande pour les tocs d'entraînement (18).

14. Dispositif de transport selon la revendication 13, caractérisé en ce qu'entre les plaques (10) parallèles sont fixées des barres de glissement (11, 12) pour le guidage du moyen de traction (13).

15. Dispositif de transport selon l'une des revendications 1 à 14, caractérisé en ce qu'il comprend, pour le transport de récipients en plusieurs rangées, plusieurs moyens de traction (13) parallèles dont au moins l'un tourne entre deux rangées de récipients voisines.

16. Dispositif de transport selon la revendication 15, caractérisé en ce que chaque rangée de récipients repose sur sa propre bande transporteuse (6) et qu'entre les bandes transporteuses (6) sont formés des vides (9) dans lesquels circule au moins un moyen de traction (13) sans fin.

17. Dispositif de transport selon l'une des revendications 1 à 16, caractérisé en ce que dans sa zone d'entrée est installé un dispositif de division (29) pour le transfert des récipients à intervalles corrects aux tocs d'entraînement (18), entraîné en synchronisme avec le moyen de traction (13).

18. Dispositif de transport selon l'une des revendications 1 à 17, caractérisé en ce qu'il coopère avec la zone d'entrée du transporteur (5) d'une machine de traitement de récipients (2) qui reçoit les récipients à des intervalles corrects par les tocs d'entraînement (18).

19. Dispositif de transport selon la revendication 18, caractérisé en ce que le transporteur (5) agit sur les récipients au-dessus des tocs d'entraînement (18).

20. Dispositif de transport selon l'une des revendications 1 à 19, caractérisé en ce que, dans leur position de repos, les tocs d'entraînement (18) sont orientés avec leur extrémité libre dans le sens opposé à la direction de circulation du moyen de traction (13).

21. Dispositif de transport selon l'une des revendications 1 à 20, caractérisé en ce que, dans leur position de travail, les tocs d'entraînement (18) forment un angle aigu avec le moyen de traction (13) associé.

22. Dispositif de transport selon l'une des revendications 1 à 21, caractérisé en ce que, dans leur position de travail, les tocs d'entraînement (18) plongent au maximum jusqu'à la moitié dans la trajectoire de mouvement des récipients.

23. Dispositif de transport selon la revendication 22, caractérisé en ce que sur les deux côtés de chaque rangée de récipients est disposé respectivement un moyen de traction (13) tournant muni de tocs d'entraînement (18) qui s'engagent en partie dans la trajectoire de mouvement.
